# EUROPEAN PATENT SPECIFICATION

(11) **EP 3 168 249 B1**
(45) Date of publication and mention of the grant of the patent: **25.07.2018**
(21) Application number: 16201175.3
(22) Date of filing: 08.01.2010
(51) Int. Cl.: C08G 59/62, C08G 59/50, C08G 59/64

(54) **PROCESS FOR PRODUCTION OF THERMOPLASTIC CURED EPOXY RESIN WITH TRANSPARENCY TO VISIBLE LIGHT, AND THERMOPLASTIC EPOXY RESIN COMPOSITION**
VERFAHREN ZUR HERSTELLUNG VON THERMOPLASTISCHEM GEHÄRTETEN EPOXYHARZ MIT TRANSPARENZ FÜR SICHTBARES LICHT UND THERMOPLASTISCHE EPOXYHARZZUSAMMENSETZUNG
PROCÉDÉ DE PRODUCTION D'UNE RÉSINE EPOXYDE THERMOPLASTIQUE TRANSPARENTE À LA LUMIÈRE VISIBLE ET COMPOSITION DE RÉSINE ÉPOXYDE THERMOPLASTIQUE

(30) Priority: 09.01.2009 JP 2009003427
(43) Date of publication of application: 17.05.2017
(62) Divisional of application: 10729252.6
(73) Proprietor: Nagase ChemteX Corporation, Osaka-shi, Osaka 550-8668 (JP)
(72) Inventor: TSUJIMURA, Yutaka, Tatsuno-cho,Tatsuno-shi Hyogo 679-4124 (JP)
(74) Representative: Vossius & Partner Patentanwälte Rechtsanwälte mbB

(56) References cited:
- EP-A1- 0 396 912
- EP-A2- 0 567 066
- WO-A1-99/55757
- GB-A- 2 032 436
- US-A- 3 350 353

## Description

### TECHNICAL FIELD

The present invention relates to a thermoplastic cured epoxy resin composition and a thermoplastic cured epoxy resin with transparency to visible light.

### BACKGROUND ART

A thermoplastic epoxy resin, which is a straight-chain, high-molecular-weight epoxy polymer, has recently been used for various applications because it can be melted by heating and it is superior in flexibility, processability, and adhesion property and therefore it becomes possible to allow reuse, recycle, and secondary fabrication, which have been impossible to do for conventional thermosetting epoxy resins (see, for example, Patent Documents 1 to 3).

US3350353 discloses a composition comprising an epoxy resin, a dihydric phenol and an amine catalyst.

A thermoplastic epoxy resin is a liner polymer that is formed through chain extension caused by addition polymerization of a bifunctional epoxy compound and a compound having two active hydrogen-containing groups, e.g., a bifunctional phenol compound, accompanied by ring-opening of an epoxy ring. However, since an alcoholic hydroxyl group is generated as a result of a reaction of a bifunctional epoxy compound with an active hydrogen-containing group, e.g., a phenolic hydroxyl group, a polymer with a branched chain structure is formed if the alcoholic hydroxyl group reacts on an epoxy group. Polymers having such a structure tend to become gelled and it is difficult to melt them by heating and they are poor in solubility in solvent, so that they fail to exert properties as thermoplastic resin.

Conventionally, alkali metal compounds have been known as a polymerization catalyst for polymerizing a bifunctional epoxy compound and a bifunctional phenol compound. However, there is a problem that their reaction products are prone to gelate. Therefore, what is desirable as a curing accelerator for obtaining a thermoplastic polymer by polymerizing a bifunctional epoxy compound with a bifunctional phenol compound is an agent that restrains a reaction between one epoxy group and another epoxy group or a reaction between an epoxy group and an alcoholic hydroxyl group and instead causes a reaction between an epoxy group and a phenolic hydroxyl group. Phosphorus-based compounds and imidazole-based compounds have been suggested as such a curing accelerator, and especially, phosphorus-based curing accelerators, such as triphenyl phosphine (TPP) and tri-o-tolylphosphine (TOTP), have been used from the viewpoint of realizing good thermoplasticity of a cured product (see, for example, Patent Document 3).

However, in the case of using such a curing accelerator when producing a thermoplastic cured epoxy resin by polymerizing a bifunctional epoxy compound and a bifunctional phenol compound, the following problem is known. That is, the use of such a compound causes a product to color in orange to red though the reason for this is unclear, so that the use or application of the product will be limited. This does not very often become a problem in the field of products which are less influenced by the coloring of a resin itself. Because of the coloring of a resin itself, however, conventional thermoplastic epoxy resin compositions cannot be used successfully for products with which the influence on appearance should be taken into consideration.

### PRIOR ART DOCUMENTS

### PATENT DOCUMENTS

Patent Document 1: Japanese Patent Application Laid-Open No. 2001-335617
Patent Document 2: Japanese Patent Application Laid-Open No. 10-237271
Patent Document 3: Japanese Patent Application Laid-Open No. 2006-321897

### SUMMARY OF THE INVENTION

### PROBLEMS TO BE SOLVED BY THE INVENTION

In view of the above-described situation, the object of the present invention is to provide a thermoplastic cured epoxy resin that has transparency to visible light and realizes good thermoplasticity and a composition that affords a thermoplastic cured epoxy resin with transparency to visible light.

The present inventor investigated earnestly in order to solve the above-mentioned problems and found that triphenylamine (TPA), which is similar in structure to a phosphorus-based curing accelerator TPP, could not cure a thermoplastic epoxy resin composition. It was also found that triethylamine could not be used as a curing accelerator. As a result of further study, it was also found that nitrilotrialkanols and a certain kind of trialkylamines were unexpectedly effective as curing accelerators of thermoplastic epoxy resin compositions and also found that the use of such a curing accelerator prevented a cured product from coloring. Further study on the basis of these findings led to the present invention.

### MEANS FOR SOLVING THE PROBLEMS

The present invention is directed to a thermoplastic epoxy resin composition
comprising (A) an epoxy compound having two epoxy groups in one molecule, (B) a compound having two phenolic hydroxyl groups in one molecule, and at least one compound selected from the group consisting of N,N-dibutylethanolamine, di(2-ethylhexyl)amine, N-ethylhexylamine, N,N-dimethyl-n-octylamine, and N,N-dimethyldecylamine as (C) a curing accelerator.

The present invention is also directed to a thermoplastic cured epoxy resin with transparency to visible light obtainable by curing the above-mentioned composition.

### EFFECT OF THE INVENTION

By the above-mentioned constitution, the present invention can obtain a thermoplastic cured epoxy resin with transparency to visible light. In the present invention, "to have transparency to visible light" means that when a cured product about 3 mm in thickness is observed visually under white light, it is observed as being colorless and transparent or no coloration is observed in transparency. Such cured products do not always have such colorlessness and transparency as that optical materials are required to have, but they have colorlessness and light permeability such that they actually do not influence the appearance of products due to coloration under white light. As to the strength of the cured product of the present invention, a strength comparable to that achieved in the use of a phosphorus-based curing accelerator can be realized. Moreover, the composition of the present invention can secure a curing rate that is high enough for practical use. The cured product of the present invention has good thermoplasticity.

### BRIEF DESCRIPTION OF THE DRAWINGS

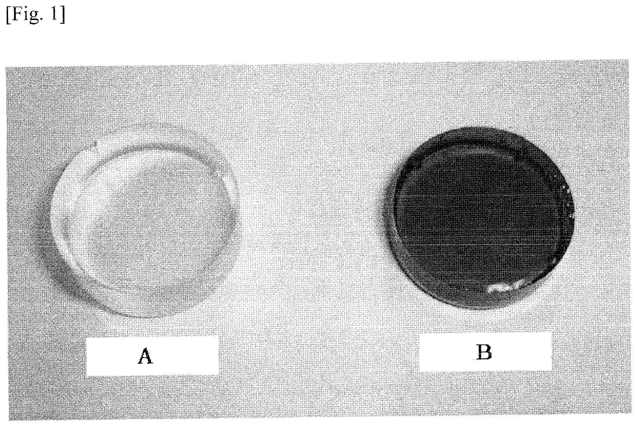

[Fig. 1] A photograph in substitution for a drawing, showing the appearance of the cured products of A (Example 1) and B (Comparative Example 4).

### MODE FOR CARRYING OUT THE INVENTION

Examples of the epoxy compound having two epoxy groups in one molecule (A) include low molecular weight diepoxy compounds, e.g. , mononucleus aromatic diepoxy compounds having one benzene ring, such as catechol diglycidyl ether, resorcinol diglycidyl ether, tert-butylhydroquinone diglycidyl ether, and phthalic acid diglycidyl ether, alicyclic epoxy compounds, such as dimethylolcyclohexane diglycidyl ether, 3,4-epoxycyclohexenylmethyl-3,4-epoxycyclohexenyl carboxylate, and limonenedioxide, bisphenol type epoxy compounds, such as bis(4-hydroxyphenyl)methane diglycidyl ether, 1,1-bis(4-hydroxyphenyl)ethane diglycidyl ether, and 2,2-bis(4-hydroxyphenyl)propane diglycidyl ether, and oligomer mixtures (collectively, also called "bisphenol type epoxy resins") resulting from partial condensation of such bisphenol type epoxy compounds, 3,3',5,5'-tetramethylbis(4-hydroxyphenyl)methane diglycidyl ether, 3,3',5,5'-tetramethylbis(4-hydroxyphenyl) ether diglycidyl ether, hydroquinone diglycidyl ether, methylhydroquinone diglycidyl ether, 2,5-di-tert-butylhydroquinone diglycidyl ether, biphenyl type or tetramethylbiphenvl type epoxy resins, and bisphenol fluorene type or biscresol fluorene type epoxy resins. These may be used solely or alternatively two or more of them may be used. Among these are preferred bisphenol type epoxy resins.

The epoxy compound (A) may be a compound that exists in a liquid form at normal temperature (25°C). Even if it is a solid compound, it can be used in the form of a solution prepared using a solvent. Moreover, it can also be dissolved in a compound (B) in a liquid form. Therefore, although the upper limit of the molecular weight of the epoxy compound is not particularly defined, the weight average molecular weight of an oligomer is usually 200 to 1500.

In the compound having two phenolic hydroxyl groups in one molecule (B), a phenolic hydroxyl group refers to a hydroxyl group substituted for a hydrogen atom on an aromatic ring. Examples of the aforementioned compound (B) include mononucleus aromatic dihydroxy compounds having one benzene ring, such as catechol, resorcinol, hydroquincne, methylhydroquinone, t-butylhydroquinone, and 2,5-di-t-butylhydroquinone, bisphenols, such as 2,2-bis[4-hydroxyphenyl)propane (bisphencol A), 1,1-bis(4-hydroxyphenyl) ethane (bisphenol AD), bis(hydroxyphenyl)methane (bisphenol F), bisphenol fluorene, and biscresol fluorene, compounds having fused rings, such as dihydroxynaphthalene, and bifunctional phenol compounds in which an allyl group has been introduced, such as diallylresorcinol, diallylbisphenol A, and triallyldihydroxybiphenyl. These may be used solely or alternatively two or more of them may be used. Among these are preferred bisphenol A and bisphenol fluorene.

The above-mentioned compound (B) may be a compound that exists in a liquid form at normal temperature (25°C) . Even if it is a solid compound, it can be used in the form of a solution prepared using a solvent. Moreover, it can also be dissolved in an epoxy compound (A) in a liquid form. Therefore, although the upper limit of the molecular weight of the compound (B) is not particularly defined, the upper limit is usually about 200 to about 500.

The compounded amount of the epoxy compound (A) and the compound (B) is preferably 0.9 to 1.1 mol, more preferably 0.95 to 1.05 mol of the compound (B) relative to 1 mol of the epoxy compound (A).

The epoxy compound (A) and the compound (B) can be polymerized in a straight chain form by a polyaddition reaction illustrated in the following scheme. Whether being a thermoplastic epoxy resin or not can be checked by the solubility of a cured product in a solvent, thermo melting property, and the like.

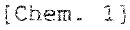

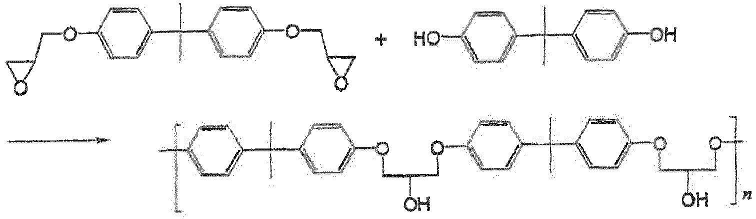

In the present invention, the curing accelerator is as defined in claim 1. Disclosed are compounds wherein R in the general formula (1): Rn-NHm represents a hydrocarbon group having 2 to 10 carbon atoms (the hydrocarbon group may be a straight or branched chain when having 3 or more carbon atoms) and having a hydroxyl group at the β position with respect to the nitrogen atom are preferred, and compounds wherein R in the above general formula (1) represents a hydrocarbon group having 2 to 6 carbon atoms are more preferred. In the above general formula (1), n is preferably 2 or 3, and n is more preferably 3.

Examples of the curing accelerator (C) (reference examples) include alcoholamines and alkylalcoholamines each having a straight or branched, preferably saturated, hydrocarbon chain (e.g., alkyl groups, such as methyl, ethyl, n-propyl, isopropyl, n-butyl, isobutyl, sec-butyl, tert-butyl, n-pentyl, 2-pentyl, 3-pentyl, i-pentyl, 2-methylbutyl, 3-methylbutyl, neo-pentyl, n-hexyl, isohexyl, neohexyl, n-heptyl, 2-heptyl, and n-decyl, or hydrocarbon chains each resulting from the removal of one hydrogen atom from such an alkyl group when having a hydroxyl group). Specific examples of the alcoholamines (reference examples) include monoethanolamine, diethanolamine, triethanolamine, triisopropanolamine, tri(2-butanol)amine, tri(t-butanol)amine, tri(2-pentanol)amine, tri(3-methyl-2-butanol)amine, and tri(2-methyl-2-butanol)amine. Among these, triethanolamine, triisopropanolamine, monoethanolamine, and diethanolamine are preferred, and triethanolamine are more preferred because their reaction speed is high and a high flexural strength is achieved.

Specific examples of the alkylalcoholamines (reference examples) include N-butyldiethanolamine, 3-diethylamino-1-propanol, 4-(butylamino)-1-butanol, 1-dibutylamino-2-propanol, and 1-dibutylamino-2-butanol. Among these, N-butyldiethanolamine and N,N-dibutylethanolamine are preferred because a high flexural strength is achieved and N,N-dibutylethanolamine has an additional advantage that the curing time is short.

A specific example of an alkylalcoholamine according to the present invention is N,N-dibutylethanolamine.

According to the present disclosure, as the curing accelerator (C), one member or two or more members selected from among the aforementioned curing accelerator as defined in claim 1 may be used.

The curing accelerator (C) disclosed herein also may be a compound wherein R in the above general formula (1) represents a straight- or branched-chain, preferably saturated, monovalent hydrocarbon group having 3 to 10 carbon atoms, preferably having 3 to 6 carbon atoms, and having no hydroxyl group (e.g., methyl, ethyl, n-propyl, isopropyl, n-butyl, isobutyl, sec-butyl, tert-butyl, n-pentyl, 2-pentyl, 3-pentyl, i-pentyl, 2-methylbutyl, 3-methylbutyl, neo-pentyl, n-hexyl, isohexyl, neohexyl, n-heptyl, 2-heptyl, and n-decyl). In the above general formula (1), n is preferably 2 or 3 and is more preferably 3. Preferable examples of such compounds include straight-chain or branched-chain dialkylamines or trialkylamines. Specific examples of the dialkylamines (reference examples) include diisobutylamine, di-sec-butylamine, diisopentylamine, N-sec-butylpropylamine, dipropylamine, dipentylamine, dihexylamine, and diheptylamine,
and examples of the trialkylamines include tripropylamine (straight chain; the same is applied hereinafter), tri-n-butylamine, triisobutylamine, tripentylamine (straight chain; the same is applied hereinafter), trihexylamine (straight chain; the same is applied hereinafter), N,N-diisopropylethylamine, and triisopentylamine (reference examples). Specific examples of the dialkylamines useful according to the present invention include di(2-ethylhexyl)amine, and N-ethylhexylamine, and examples of trialkylamines according to the present invention include N,N-dimethyl-n-octylamine, and N,N-dimethyldecylamine. These may be used solely or two or more of these may be used. Among these, tripropylamine, tri-n-butylamine, tripentylamine, or their combination is preferred, tri-n-butylamine, tripentylamine, or their combination is more preferred, and tri-n-butylamine is even more preferred (reference examples) .

When a compound wherein R in the above general formula (1) represents a hydrocarbon group having 2 to 10 carbon atoms and having a hydroxyl group at the β position with respect to the nitrogen atom is used as the curing accelerator (C) N,N-dibutylethanolamine, its use amount is preferably, from the viewpoint of achievement of a higher molecular weight, 0.5 to 10 parts by weight, more preferably 1.5 to 6 parts by weight, and particularly preferably 1.5 to 3 parts by weight relative to 100 parts by weight of the aforementioned epoxy compound (A).

When a compound wherein R in the above general formula (1) represents a hydrocarbon group having 3 to 10 carbon atoms and having no hydroxyl group is used as the curing accelerator (C), di(2-ethylhexyl)amine, N-ethylhexylamine, N,N-dimethyl-n-octylamine, or N,N-dimethyldecylamine, its use amount is preferably, from the viewpoint of achievement of a higher molecular weight, 0.01 to 10 parts by weight, more preferably 0.1 to 5 parts by weight, and particularly preferably 1 to 3 parts by weight relative to 100 parts by weight of the aforementioned epoxy compound (A).

In order to afford stable thermoplasticity and increase the rate of reaction, the curing accelerator (C) may be a combination of a compound wherein R in the above general formula (1) represents a hydrocarbon group having 2 to 10 carbon atoms and having a hydroxyl group at the β position with respect to the nitrogen atom: N,N-dimethylethanolamine and a compound wherein R in the above general formula (1) represents a monovalent hydrocarbon group having 3 to 10 carbon atoms and having no hydroxyl group: di(2-ethylhexyl)amine, N-ethylhexylamine, N,N-dimethyl-n-octylamine, and N,N-dimethyldecylamine. In this case, the combination ratio, expressed in weight ratio, of the compound wherein R in the above general formula (1) represents a hydrocarbon group having 2 to 10 carbon atoms and having a hydroxyl group at the β position with respect to the nitrogen atom to the compound wherein R in the above general formula (1) represents a monovalent hydrocarbon group having 3 to 10 carbon atoms and having no hydroxyl group is preferably 1 to 100 : 100 to 1, more preferably 1 to 10 : 10 to 1. The sum total of the use amounts of the compound wherein R in the above general formula (1) represents a hydrocarbon group having 2 to 10 carbon atoms and having a hydroxyl group at the β position with respect to the nitrogen atom and the compound wherein R in the above general formula (1) represents a monovalent hydrocarbon group having 3 to 10 carbon atoms and having no hydroxyl group is preferably 0.01 to 10 parts by weight, more preferably 0.1 to 5 parts by weight, and particularly preferably 1 to 3 parts by weight relative to 100 parts by weight of the abovementioned epoxy compound (A).

Moreover, a solvent may be used for the purpose of viscosity adjustment or the like so long as the object of the present invention is not disturbed. Examples of the solvent include ketones, such as acetone, methyl ethyl ketone (MEK), methyl isobutyl ketone (MIBK), and cyclohexanone, and ethers, such as methylcellosolve, and ethylene glycol dibutyl ether. Among these, acetone is preferred because it vaporizes easily at the time of curing by heating. The use amount is preferably 0.1 to 15 parts by weight, and more preferably 4 to 8 parts by weight relative to 100 parts by weight of the resin component. If too little, phenols will be separated and if too much, physical properties will deteriorate greatly due to the remaining of the solvent after polymerization.

In addition, a colorant, a UV absorber, an antioxidant for resistance to heat, an antioxidant for resistance to light, a toughening agent, a plasticizer, and the like may be blended if desired so long as the object of the present invention is not disturbed.

The composition of the present invention can be obtained by combining and mixing the above-described components. At this time, it may be either a one-component composition or a two-component composition. In this case, the above-mentioned curing accelerator (C) may have been added to the epoxy compound (A), the compound (B), or both.

In the curing step ,
although the temperature range in which a curing reaction is caused varies with the kinds of the reactive compositions and the curing accelerator to be used, the curing temperature is usually 120 to 180°C and the curing time is usually 5 minutes to about 24 hours.

In accordance with the present invention, a thermoplastic cured epoxy resin with transparency to visible light can be obtained by using the composition of the present invention. The cured product has thermomeltability, transparency, and solubility in solvent and it can have sufficient flexural strength.

### EXAMPLES

The present invention is described in more detail below with reference to Examples, but the following description is only for illustration and the invention is not limited to these Examples.

### Examples 1 to 9 (reference examples), Comparative Examples 1 to 6

Thermoplastic epoxy resin compositions were obtained by mixing raw materials for use shown in the following Table 1 in parts by weight given in the table.
The obtained compositions developed no polymerization reaction during their preparation and their storage at room temperature. The meanings of the codes in Table 1 are as follows.
AER260: Bisphenol type liquid epoxy resin produced by Asahi Kasei Corporation (epoxy equivalent weight: 190 g/eq)
BPA: Bisphenol A (hydroxyl group equivalent: 114 g/eq) produced by Mitsui Chemicals, Inc.
TOTP: Tri-o-tolylphosphine (molecular weight: 304) produced by Hokko Chemical Industry Co., Ltd.
TPP: Triphenylphosphine (molecular weight: 262) produced by Hokko Chemical Industry Co., Ltd.
Triphenylimidazole: 2,4,5-Triphenylimidazole
TBZ: A compound represented by the following formula, wherein n = 3.

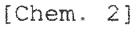

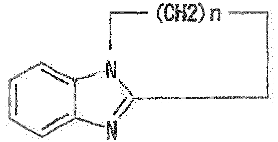

The obtained compositions were each put in an aluminum pan 18 mm in diameter, and at 130°C the compositions with the use of triethanolamine, triisopropanolamine, monoethanolamine, or diethanolamine were each cured for 6 hours, the composition with the use of N-butyldiethanolamine was cured for 3 hours, and the compositions with the use of tri-n-propylamine, tri-n-butylamine, tripentylamine, trihexylamine, triethylamine, TPP, TOTP, TBZ, or triphenylimidazole were each cured for 1 hour. The cured products were evaluated for their appearance, solubility in solvent, and molecular weight by the following methods. For Examples 1, 2 and 7 and Comparative Examples 3 and 4, the obtained compositions were cured under the same condition by using a mold for producing a bending specimen, thereby producing bending specimens. The flexural strength was evaluated by the following method. The results were shown in Table 1. In Comparative Example 1 using triphenylamine, however, the curing time could not be shown in the table because no cured product was obtained. Moreover, performance evaluation was not carried out.

Since the obtained cured products were remelted by only heating for 1 minute at 150 to 200°C, it was successfully confirmed that they were capable of being bended easily and they were straight-chain polymer having no cross-linked structure.

Flexural strength: The measurement of static flexural strength (MPa) (Examples 1, 2 and 7 and Comparative Examples 3 and 4) was conducted by a three-point bending test in accordance with ASTM D-790 using an INSTRON universal material tester. The shape of the specimen is defined by height h = 6 mm, width b = 13 mm, and length 1 = 120 mm, and the bending span is 100 mm. The measurement temperature is 25°C. Appearance: A cured product (18 mm in diameter and 3 mm in thickness) was placed on white paper, and its transparency was observed by visual observation under natural light. For Example 1 and Comparative Example 4, a photograph in substitution for a drawing showing the appearance of the cured products was shown in Fig. 1. A (Example 1) was transparent and B (Comparative Example 4) was colored in red. Solubility in solvent: Whether the cured product was dissolved in tetrahydrofuran (evaluation o) or not (evaluation ×) was observed. Dissolution condition: cured product/tetrahydrofuran = 1/100 (weight ratio). Weight average molecular weight: A cured product was dissolved in tetrahydrofuran and then a molecular weight was measured in terms of polystyrene by GPC. Measurement conditions: 40°C, flow rate = 1 ml/min.

**[Table 1]**

| | Examples | | | | | | | | | Comparative Examples | | | | | |
|---|---|---|---|---|---|---|---|---|---|---|---|---|---|---|---|
| | 1 | 2 | 3 | 4 | 5 | 6 | 7 | 8 | 9 | 1 | 2 | 3 | 4 | 5 | 6 |
| AER260 | 100 | 100 | 100 | 100 | 100 | 100 | 100 | 100 | 100 | 100 | 100 | 100 | 100 | 100 | 100 |
| BPA | 60 | 60 | 60 | 60 | 60 | 60 | 60 | 60 | 60 | 60 | 60 | 60 | 60 | 60 | 60 |
| Triethanolamine | 3 | - | - | - | - | - | - | - | - | - | - | - | - | - | - |
| Triisopropanolamine | - | 3 | - | - | - | - | - | - | - | - | - | - | - | - | - |
| Monoethanolamine | - | - | 3 | - | - | - | - | - | - | - | - | - | - | - | - |
| Diethanolamine | - | - | - | 3 | - | - | - | - | - | - | - | - | - | - | - |
| N-Butyldiethanolamine | - | - | - | - | 3 | - | - | - | - | - | - | - | - | - | - |
| Tri-n-propylamine | - | - | - | - | - | 3 | - | - | - | - | - | - | - | - | - |
| Tri-n-butylamine | - | - | - | - | - | - | 3 | - | - | - | - | - | - | - | - |
| Tripentylamine | - | - | - | - | - | - | - | 3 | - | - | - | - | - | - | - |
| Trihexylamine | - | - | - | - | - | - | - | - | 3 | - | - | - | - | - | - |
| Triphenylamine | - | - | - | - | - | - | - | - | - | 4 | - | - | - | - | - |
| Triethylamine | - | - | - | - | - | - | - | - | - | - | 3 | - | - | - | - |
| TPP | - | - | - | - | - | - | - | - | - | - | - | 4 | - | - | - |
| TOT P | - | - | - | - | - | - | - | - | - | - | - | - | 2 | - | - |
| TBZ | - | - | - | - | - | - | - | - | - | - | - | - | - | 2 | |
| Triphenylimidazole | - | - | - | - | - | - | - | - | - | - | - | - | - | - | 2 |
| Curing time (h) | 6 | 6 | 6 | 6 | 3 | 1 | 1 | 1 | 1 | - | 1 | 1 | 1 | 1 | 1 |
| Appearance | Trans parent | Trans parent | Trans parent | Trans parent | Trans parent | Trans parent | Trans parent | Trans parent | Trans parent | - | Trans parent | Orange | Red | Red | Pale yellow |
| Solubility in solvent | ○ | ○ | ○ | ○ | ○ | ○ | ○ | ○ | ○ | - | × | ○ | ○ | × | × |
| Weight average molecular weight | 23000 | 8200 | 12300 | 14700 | 35000 | 66000 | 64000 | 57100 | 53302 | - | - | 140000 | 90000 | - | - |
| Flexural strength (Mpa) | 100 | 12 | - | - | - | - | 100 | - | - | - | - | 91 | 88 | - | - |
| Remarks | - | - | - | - | - | - | - | - | - | Not cured | - | - | - | - | - |

These results clearly showed that the cured products had thermomeltability and solubility in solvent and they were thermoplastic epoxy resins. Moreover, that they had transparency was shown. On the other hand, no cured product was obtained in the case of using triphenylamine (Comparative Example 1), and solubility in solvent was not shown in the case of using triethylamine (Comparative Example 2). The cured products using TPP (Comparative Example 3) or TOTP (Comparative Example 4) showed solubility in solvent and showed that thermoplastic epoxy resins were obtained, but they were colored. The cured products using TBZ (Comparative Example 5) or triphenylimidazole (Comparative Example 6) failed to have solubility in solvent.

The cured products obtained by curing the compositions especially, the cured products using triethanolamine or tri-n-butylamine (reference examples) showed values of flexural strength improved in comparison to the cases using conventional phosphorus-based curing accelerators (Comparative Examples 3 and 4).

Since the cured products using the compositions of the present invention are those having physical properties as thermoplastic epoxy resins and also having transparency, they can be used for various applications, such as plastics for electronic parts, adhesive, paint, multilayer film, and plastic molded articles, and the degree of freedom of coloring increases because they have a transparent ground color.

## Claims

1. A thermoplastic epoxy resin composition comprising (A) an epoxy compound having two epoxy groups in one molecule, (B) a compound having two phenolic hydroxyl groups in one molecule, and at least one compound selected from the group consisting of N,N-dibutylethanolamine, di(2-ethylhexyl)amine, N-ethylhexylamine, N,N-dimethyl-n-octylamine, and N,N-dimethyldecylamine as (C) a curing accelerator.

2. The thermoplastic epoxy resin composition according to claim 1, wherein the curing accelerator (C) is selected from the group consisting of di(2-ethylhexyl)amine, N-ethylhexylamine, N,N-dimethyl-n-octylamine, and N,N-dimethyldecylamine and is contained in an amount of 0.01 to 10 parts by weight relative to 100 parts by weight of the epoxy compound (A).

3. The thermoplastic epoxy resin composition according to claim 1, wherein the curing accelerator (C) is N,N-dibutylethanolamine and is contained in an amount of 0.5 to 10 parts by weight relative to 100 parts by weight of the epoxy compound (A).

4. A thermoplastic cured epoxy resin with transparency to visible light obtainable by curing the thermoplastic epoxy resin composition according to any one of claims 1 to 3.

## Patentansprüche

1. Eine thermoplastische Epoxidharzzusammensetzung umfassend (A) eine Epoxidverbindung mit zwei Epoxidgruppen in einem Molekül, (B) eine Verbindung mit zwei phenolischen Hydroxylgruppen in einem Molekül und mindestens eine Verbindung ausgewählt aus der Gruppe bestehend aus N,N-Dibutylethanolamin, Di(2-ethylhexyl)amin, N-Ethylhexylamin, N,N-Dimethyl-n-octylamin und N,N-Dimethyldecylamin als (C) einen Härtungsbeschleuniger.

2. Die thermoplastische Epoxidharzzusammensetzung gemäß Anspruch 1, wobei der Härtungsbeschleuniger (C) ausgewählt ist aus der Gruppe bestehend aus Di(2-ethylhexyl)amin, N-Ethylhexylamin, N,N-Dimethyl-n-octylamin und N,N-Dimethyldecylamin und in einer Menge von 0,01 bis 10 Gewichtsteilen, bezogen auf 100 Gewichtsteile der Epoxidverbindung (A), enthalten ist.

3. Die thermoplastische Epoxidharzzusammensetzung gemäß Anspruch 1, wobei der Härtungsbeschleuniger (C) N,N-Dibutylethanolamin ist und in einer Menge von 0,5 bis 10 Gewichtsteilen, bezogen auf 100 Gewichtsteile der Epoxidverbindung (A), enthalten ist.

4. Ein thermoplastisches gehärtetes Epoxidharz mit Transparenz für sichtbares Licht erhältlich durch Härten der thermoplastischen Epoxidharzzusammensetzung gemäß einem der Ansprüche 1 bis 3.

## Revendications

1. Composition de résine époxy thermoplastique comprenant (A) un composé époxy ayant deux groupes époxy par molécule, (B) un composé ayant deux groupes hydroxyle phénoliques par molécule, et au moins un composé sélectionné parmi le groupe constitué par N,N-dibutyléthanolamine, di(2-éthylhexyl)amine, N-éthylhexylamine, N,N-diméthyl-n-octylamine, et N,N-diméthyldécylamine en tant que (C) un accélérateur de durcissement.

2. Composition de résine époxy thermoplastique selon la revendication 1, dans laquelle l'accélérateur de durcissement (C) est sélectionné parmi le groupe constitué par di(2-éthylhexyl)amine, N-éthylhexylamine, N,N-diméthyl-n-octylamine, et N,N-diméthyldécylamine et est contenu en une quantité de 0,01 à 10 parties en poids pour 100 parties en poids du composé époxy (A).

3. Composition de résine époxy thermoplastique selon la revendication 1, dans laquelle l'accélérateur de durcissement (C) est une N,N-dibutyléthanolamine et est contenu en une quantité de 0,5 à 10 parties en poids pour 100 parties en poids du composé époxy (A).

4. Résine époxy thermoplastique durcie avec une transparence à la lumière visible pouvant être obtenue par durcissement de la composition de résine époxy thermoplastique selon l'une quelconque des revendications 1 à 3.
